Europäisches Patentamt

European Patent Office

Office européen des brevets

(11) Veröffentlichungsnummer: **0 205 663**
**A1**

(12) **EUROPÄISCHE PATENTANMELDUNG**

(21) Anmeldenummer: **85115583.8**

(22) Anmeldetag: **07.12.85**

(51) Int. Cl.⁴: **G 09 B 9/00**

(30) Priorität: **27.06.85 CH 2722/85**

(71) Anmelder: **SIEMENS-ALBIS AKTIENGESELLSCHAFT,
EGA1/Verträge und Patente Postfach, CH-8047 Zürich
(CH)**

(43) Veröffentlichungstag der Anmeldung: **30.12.86**
**Patentblatt 86/52**

(84) Benannte Vertragsstaaten: **AT BE CH DE LI**

(72) Erfinder: **Hossmann, Marcel, Im Strähler 44,
CH-8047 Zürich (CH)**

(54) Verfahren zur Funksimulation und Funksimulator.

㉗ Zur Funksimulation ist zwischen zwei Funkstationen (FK1, FK2), die je eine Kunstantenne (KA1; KA2) aufweisen, wenigstens ein Dämpfungsglied (D0) derart eingefügt und eingestellt, daß eine vorgegebene Übertragungsstrecke simuliert wird. Dabei wird einem der Anschlüsse der Dämpfungsglieder (D0) ein simuliertes Störsignal zugeführt, das die elektromagnetische Umgebung simuliert. Ein Funksimulator mit einem Dämpfungsnetzwerk, an das mehrere Funkstationen angeschlossen sind, ermöglicht Ausbildungsprogramme durchzuführen, bei denen mehrere Funker gleichzeitig üben können.

0205663
Unser Zeichen
85P9808

Zürich

## Verfahren zur Funksimulation und Funksimulator

Die vorliegende Erfindung betrifft ein Verfahren zur Funksimulation sowie einen nach diesem Verfahren betriebenen Funksimulator.

Bei der Ausbildung von Funkpersonal an Funkgeräten mit normalen Sende- und Empfangsantennen werden oft durch diese Funkübungen reguläre Funkübertragungen Dritter gestört. Die Erfindung stellt sich daher die Aufgabe, ein Verfahren zur Funksimulation zu schaffen, das keine Störungen bei der Funkübertragung von Dritten verursacht.

Diese Aufgabe wird erfindungsgemäss durch ein Verfahren nach dem kennzeichnenden Teil des Patentanspruches 1 gelöst. Damit können in vorteilhafter Weise dem Simulator beliebige Signale zugeführt werden, die ähnlich wie die in der Umgebung vorhandenen elektromagnetischen Wellen wirken, und zwar unter Verwendung von normalen Funkstationen und ohne die regulären Funkübertragungen von Dritten zu stören. Zur Durchführung dieses Verfahrens ist in Anspruch 3 ein Funksimulator angegeben. Vorteilhafte Ausführungen der Erfindung sind in den abhängigen Ansprüchen beschrieben.

Die Erfindung wird nachfolgend durch Beschreibung von Ausführungsbeispielen anhand von Zeichnungen näher erläutert. Es zeigt:

Fig. 1 das Blockschaltbild einer Einrichtung für Ausbildungszwecke, bestehend aus einem Simulator und zwei Funkstationen,

Fig. 2 das Blockschaltbild eines Netzwerkes aus Dämpfungsgliedern für eine erfindungsgemässe Einrichtung für Ausbildungszwecke.

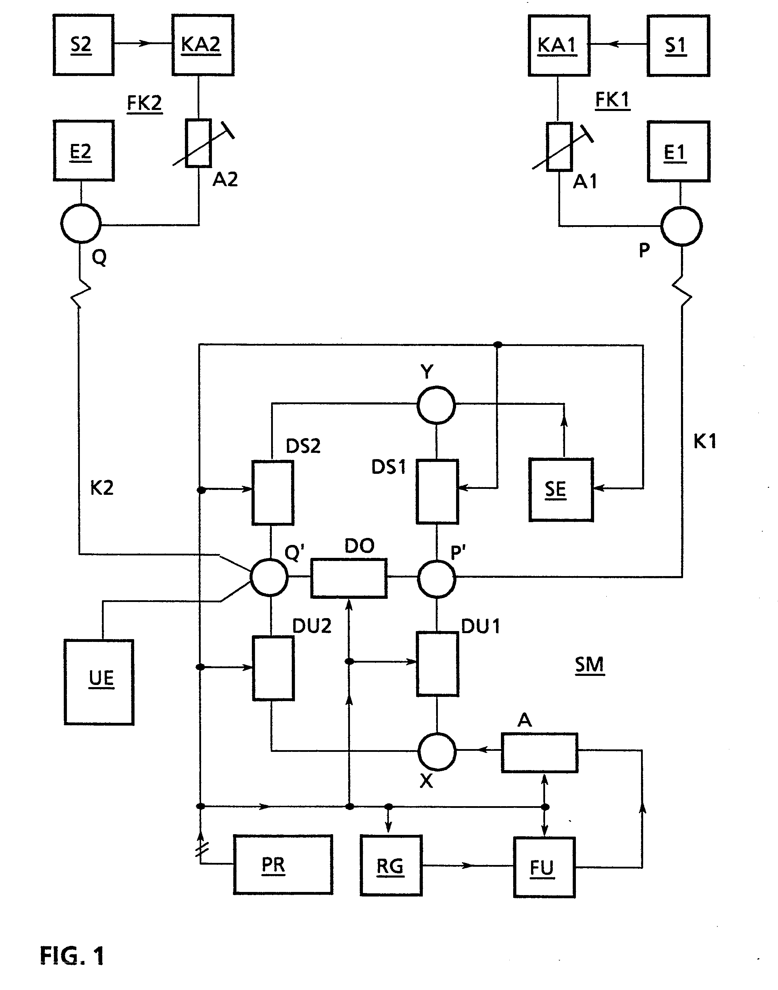

Der Simulator SM nach Fig. 1 umfasst fünf variable Dämpfungsglieder DS1, DS2, DU2, DU1, D0, von denen die vier ersten eine Ringschaltung bilden und das fünfte zwischen den ersten Anschluss P' des ersten Dämpfungsgliedes DS1 und den zweiten Anschluss Q' des zweiten Dämpfungsgliedes DS2 eingefügt ist. Ein Dämpfungsglied kann beispielsweise ein Widerstand, ein Attenuator oder ein elektronisches Dämpfungselement sein. Der gemeinsame Anschluss X der Dämpfungsglieder DU2 und DU1 ist über die Reihenschaltung eines weiteren Dämpfungsgliedes A und eines Frequenzumsetzers FU an den Ausgang eines Registriergerätes RG (Recorder) angeschlossen.

Der Simulator SM umfasst zudem einen Signalerzeuger SE sowie einen Prozessor PR, der zur Steuerung der verschiedenen Dämpfungsglieder, des Signalerzeugers SE, des Umsetzers FU und des Registiergerätes RG dienen kann. Der Ausgang des Signalerzeugers SE ist mit dem gemeinsamen Anschluss Y der Dämpfungsglieder DS1 und DS2 verbunden. An die Anschlüsse P' und Q' des Simulators SM, welche durch sogenannte Knoten gebildet sein können, ist je eine Funkstation FK1 bzw. FK2 angeschlossen, und zwar jeweils über ein Koaxialkabel K1 bzw. K2, dessen Länge einige Meter bis einige Kilometer betragen kann. Solche Knoten können Lötstellen, Sammelschienen, Steckdosen und/oder Verbindungsschaltungen sein, die zusätzlich eine Impedanzanpassung bewirken. Die Funkstation FK1 weist einen Funksender S1 auf, dessen Sendeleistung in einer strahlungsfreien Kunstantenne KA1 bis auf einen kleinen Betrag vernichtet wird. Der Ausgang der Kunstantenne KA1 und der Eingang eines Empfängers E1 sind an einen mit dem Kabel K1 verbundenen Knoten P angeschlossen, wobei zwischen dem Knoten P und der Ausgang der Kunstantenne KA1 noch ein Dämpfungsglied A1 eingefügt werden kann. Die Funkstation FK2 ist gleich wie die Station FK1 aufgebaut und weist die entsprechenden Elemente S2, KA2, A2, E2 und Q auf. Gegebenenfalls können die Knoten P und Q auch Frequenzweichen sein.

Der Funksimulator nach Fig. 1 funktioniert folgendermassen:

Zwischen den Knoten P und Q können Sende- und Empfangssignale in beiden Richtungen derart über den Simulator SM übertragen werden, dass eine vorgegebene Uebertragungsstrecke simuliert wird. Da in den Kunstantennen KA1 und KA2 der grösste Teil der Sendeleistung vernichtet und die verbleibende Sendeleistung über abgeschirmte Kabel übertragen wird, werden Funkübertragungen von Dritten nicht gestört. Durch die Abschwächer A1 und A2 kann der Abstand zwischen dem Sender S1 und dem Empfänger E1 bzw. zwischen dem Sender S2 und dem Empfänger E2 simuliert werden.

Der Signalerzeuger SE, der einen oder mehrere Störsender verschiedenster Art simuliert, kann beispielsweise ein Signalgenerator oder ein Antennenverstärker sein, durch den die gerade empfangenen elektromagnetischen Wellen als Störsignale verwendet werden. Das Registriergerät RG, der Frequenzumsetzer FU und das Dämpfungsglied A simulieren eine elektromagnetische Umgebung samt Fading, das heisst im Idealfall die Gesamtheit aller elektromagnetischen Wellen bzw. Signale, die im Frequenzbereich der Funkverbindung wirksam werden können. Durch den Prozessor PR werden die Dämpfungsglieder D0, DS1, DS2, DU2, DU1, der Signalerzeuger SE und die aus den Elementen RG, FU und A bestehende Registrierschaltung derart gesteuert, dass eine übliche Funkverbindung zwischen den zwei Funkstationen FK1 und FK2 simuliert wird, wie wenn sie mit normalen Sendeantennen statt der Kunstantennen KA1 und KA2 und mit normalen Empfangsantennen (bei E1 und E2) anstelle der Kabel K1, K2 versehen wären. Mit einem Funksimulator nach Fig. 1, der eigentlich eine Einrichtung für Ausbildungszwecke darstellt, können unter Vermeidung von unerwünschten Sendesignalen alle mehr oder weniger komplizierten Bedienungsvorgänge simuliert werden, die in den Funkstationen üblich sind. Dazu gehört beispielsweise die Bedienung einer Station in allen möglichen Betriebsarten, auch unter Berücksichtigung zugehöriger Abstimmvorgänge, der Funkverkehr bei beliebig starken atmosphärischen oder künstlichen Störungen, die Schulung des Funkpersonals unter Berücksichtigung der Reaktionen, die sich bei solchen Verhältnissen ergeben können, usw. Im Gegenverkehr arbeiten beide Sender S1, S2 und beide Empfänger E1, E2, gleichzeitig, jedoch auf zwei verschiedenen Frequenzen. Im Wechselverkehr arbeiten nur ein Sender und der Empfänger der Gegenstation gleichzeitig. An einen der Knoten P' und/oder Q' kann zusätzlich eine Ueberwachungseinheit UE angeschlossen werden, die mit einem Panoramaempfänger (Spectrum analyser) und weiteren gewöhnlichen Empfängern und/oder Allbandempfängern ausgerüstet ist. Die Ueberwachungseinheit UE erlaubt dem Uebungsleiter, den Ablauf der Uebungen zu verfolgen.

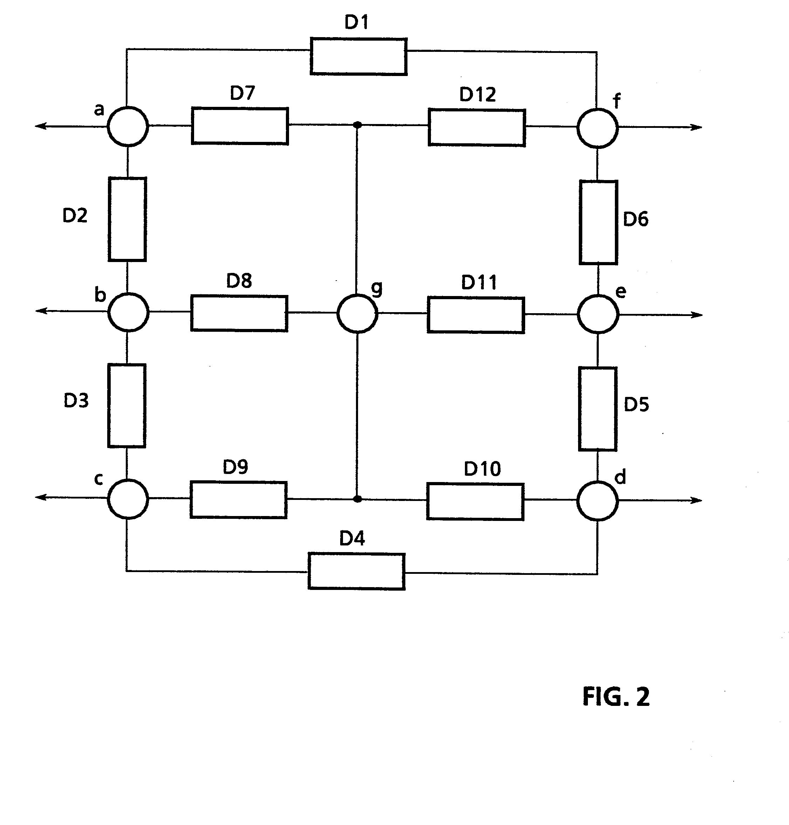

Das Dämpfungsnetzwerk nach Fig. 2 besteht aus einer Reihe von sechs Dämpfungsgliedern D1, D2, D3, D4, D5, D6, die eine Ringschaltung bilden, wobei zwischen zwei Dämpfungsgliedern jeweils ein Knoten a, b, c, d, e bzw. f vorhanden ist, der jeweils über ein weiteres Dämpfungsglied D7, D8, D9, D10, D11 bzw. D12 an einen gemeinsamen Knoten g angeschlossen sein kann, wodurch ein vermaschtes Netzwerk entsteht. An den Knoten a, b, c, d, e, f und/oder g kann mindestens eine Funkstation und/oder ein Signalerzeuger und/oder eine Ueberwachungsschaltung angeschlossen sein, wobei ein Signalerzeuger auch eine Registriereinrichtung sein kann. Die Dämpfungsglieder können ebenfalls von einem in Fig. 2 nicht dargestellten Prozessor gesteuert werden. Eine Einrichtung für Ausbildungszwecke mit mehreren Funkstationen und einem Dämpfungsnetzwerk nach Fig. 2 ermöglicht Ausbildungsprogramme durchzuführen, bei denen mehrere Funker gleichzeitig üben können. Im übrigen entspricht die Arbeitsweise dieser Einrichtung derjenigen nach Fig. 1. Daraus ist ersichtlich, dass derartige Einrichtungen oder Funksimulatoren mit beliebigen Netzwerken aus Dämpfungsgliedern ausgerüstet sein können. Als Funkstationen können auch solche verwendet werden, die nur aus einem Sender oder aus einem Empfänger bestehen und daher keine Antennenknoten benötigen. Der erfindungsgemässe Funksimulator kann allerdings nicht nur zur Ausbildung von Funkpersonal, sondern auch in Forschung und Entwicklung Anwendung finden.

PATENTANSPRUECHE

1. Verfahren zur Funksimulation, d a d u r c h   g e k e n n z e i c h n e t , dass zwischen zwei Funkstationen (FK1, FK2), von denen mindestens eine eine Kunstantenne (KA1; KA2) aufweist, wenigstens ein Dämpfungsglied (D0) derart eingefügt ist, dass eine vorgegebene Uebertragungsstrecke simuliert wird.

2. Verfahren nach Anspruch 1, d a d u r c h   g e k e n n z e i c h n e t , dass einem der Anschlüsse (P, Q) dieses Dämpfungsgliedes (D0) ein simuliertes Störsignal zugeführt wird.

3. Funksimulator zur Durchführung des Verfahrens nach Anspruch 1 oder 2, d a - d u r c h   g e k e n n z e i c h n e t , dass zwischen wenigstens zwei Funkstationen (FK1, FK2) ein Netzwerk mit mindestens zwei Dämpfungsgliedern (D0; DS1, DS2; DU1, DU2) eingefügt ist, und dass zur Erzeugung von die elektromagnetische Umgebung simulierenden Störsignalen mindestens ein Signalerzeuger vorhanden ist, dessen Ausgangssignal dem Knoten zugeführt wird, durch welchen diese zwei Dämpfungsgliedern (D0; DS1, DS2; DU1, DU2) verbunden sind.

4. Funksimulator nach Anspruch 3, d a d u r c h   g e k e n n z e i c h n e t , dass wenigstens ein Signalerzeuger ein Signalgenerator (SE) oder eine mit gespeicherten Störsignalen versehene Registriereinrichtung (RG, FU, A) ist.

5. Funksimulator nach Anspruch 3, d a d u r c h   g e k e n n z e i c h n e t , dass wenigstens ein Signalerzeuger einen Antennenverstärker aufweist, um die momentan vorhandenen elektromagnetischen Wellen der Umgebung als simulierte Störsignale zu verwenden.

6. Funksimulator nach einem der Ansprüche 3 bis 5, d a d u r c h  g e k e n n -
z e i c h n e t , dass mindestens ein variables Dämpfungsglied (D0) des Netzwerkes
von einer Zentralstelle aus regelbar ist.

7. Funksimulator nach einem der Ansprüche 3 bis 6, d a d u r c h  g e k e n n -
z e i c h n e t , dass mindestens ein variables Dämpfungsglied (D0) von einem Prozessor (PR) steuerbar ist.

8. Funksimulator nach Anspruch 7, d a d u r c h  g e k e n n z e i c h n e t , dass
der Prozessor (PR) auch den bzw. die Signalerzeuger (SE; RG, FU, A) steuert.

9. Funksimulator nach einem der Ansprüche 1 bis 8, d a d u r c h  g e k e n n -
z e i c h n e t , dass an mindestens einen Konoten eine Uebrwachungseinheit angeschlossen ist.

10. Funksimulator nach einem der Ansprüche 3 bis 9, d a d u r c h  g e k e n n -
z e i c h n e t , dass mindestens einer der Kunstantennen (KA1; KA2) ein weiteres
Dämpfungsglied (A1; A2) nachgeschaltet ist.

FIG. 1

**FIG. 2**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 517 591 (NIGHTENHELSER) * Spalte 1, Zeilen 28-47; Spalte 2, Zeilen 29-37; Spalte 5, Zeilen 53-55; Spalte 10, Ansprüche 7-9; Figuren 1,2 * | 1,3,10 | G 09 B 9/00 |
| A | GB-A- 600 910 (LINK AVIATION DEVICES INC.) * Seite 9, Ansprüche 11-13 * | 1-4 | |
| A | RADIO & ELECTRONIC ENGINEER, Band 52, Nr. 10, Oktober 1982, Seiten 475-478, Institution of electronic and Radio Engineers, London, GB; J.R. BALL: "A real-time fading simulator for mobile radio" | | |

RECHERCHIERTE SACHGEBIETE (Int. Cl.4)

G 09 B

Der vorliegende Recherchenbericht wurde für alle Patentansprüche erstellt.

| Recherchenort | Abschlußdatum der Recherche | Prüfer |
|---|---|---|
| DEN HAAG | 27-08-1986 | ODGERS M.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82